# EUROPÄISCHE PATENTSCHRIFT

(11) **EP 1 857 792 B1**
(45) Veröffentlichungstag und Bekanntmachung des Hinweises auf die Patenterteilung: **19.10.2011**
(21) Anmeldenummer: 07007012.3
(22) Anmeldetag: 04.04.2007
(51) Int. Cl.: G01J 5/04

(54) **Verfahren und Vorrichtung zum Messen einer Temperatur einer Metallschmelze**
Method and device for measuring the temperature of a molten bath
Procédé et dispositif destinés à la mesure de température de scories

(30) Priorität: 19.05.2006 GB 0610011
(43) Veröffentlichungstag der Anmeldung: 21.11.2007
(73) Patentinhaber: Heraeus Electro-Nite International N.V., 3530 Houthalen (BE)
(72) Erfinder: Whitaker, Robert Charles, Chesterfield, Derbyshire (GB); Seutens, Frank, 3910 Sint Huibrechts Lille (BE); Dams, Francis, 3010 Kessel-Lo (BE)
(74) Vertreter: Kühn, Hans-Christian

(56) Entgegenhaltungen:
- DE-A1- 19 916 235
- JP-A- 3 284 709
- US-B1- 6 227 702

## Beschreibung

Die Erfindung betrifft ein Verfahren zum Messen einer Kenngröße, insbesondere einer Temperatur, einer Schmelze, insbesondere einer Metallschmelze, mittels einer optischen Faser, die von einer Hülle umgeben ist, wobei die optische Faser in die Schmelze eingetaucht wird und wobei die von der optischen Faser in der Schmelze aufgenommene Strahlung einem Detektor zugeführt wird, wobei die optische Faser beim Eintauchen in die Schmelze aufgeheizt wird. Des weiteren betrifft die Erfindung eine Vorrichtung zur Messen einer Kenngröße, insbesondere einer Temperatur, einer Schmelze, insbesondere einer Metallschmelze, mit einer eine Hülle aufweisenden optischen Faser und einem mit der Faser verbundenen Detektor, wobei die Hülle die Faser in mehreren Schichten umgibt. Kenngrößen im Sinne der Erfindung können auch beispielsweise die Badhöhe oder die Zusammensetzung, also der Anteil an Bestandteilen sein. Gemessen werden kann auch in anderen Schmelzen, wie Salz-, Kryolith- oder Glasschmelzen.

Ein derartiges Verfahren ist beispielsweise aus JP 11118607 bekannt. Hier wird beschrieben, dass eine optische Faser zur Temperaturmessung in Metallschmelzen verwendet wird. Die optische Faser wird von einer Spule abgewickelt und durch ein Zuführungsrohr der Metallschmelze zugeführt. Die von der optischen Faser aufgenommene Strahlung wird von einem Detektor ausgewertet. Entsprechende optische Fasern sind beispielsweise aus JP 10176954 bekannt. Die dort beschriebene Faser ist von einem Metallrohr beabstandet umgeben. Um das Metallrohr herum ist ein Rohr aus einem isolierenden Material angeordnet, die wiederum von einem äußeren Metallrohr umgeben ist. Durch diesen Aufbau wird ein zu schnelles Abschmelzen des inneren Metallrohres verhindert. Das Rohr aus einem isolierenden Material enthält Kohlenstoffpartikel, so dass das innere Metallrohr erst dann schmilzt, wenn der entsprechende Rohrabschnitt in die Metallschmelze eingetaucht ist. Die Faser wird in einer vorher bestimmten Geschwindigkeit in die Metallschmelze eingetaucht und nachgeführt, um auch bei Zerstörung der Faserspitze kontinuierlich weiter messen zu können. Eine ähnliche optische Faser zur Temperaturmessung ist in JP 7151918 offenbart. Hier ist die optische Faser von einem metallischen Schutzrohr umgeben, welches von einer Kunststoffschicht umgeben ist.

Darüber hinaus sind mehrschichtige Drähte bekannt, die in Stahlwerken eingesetzt werden, um gezielt Dotierungsstoffe in die Stahlschmelze zu bringen (beispielsweise in DE 199 16 235, DE 37 12 619, DE 196 23 194, US 6,770,366). US 6,227,702 B1 offenbart ein Verfahren zum Messen von Parametern in Metallschmelzen mittels optischer Fasern, wobei die Faser eine isolierende Schutzschicht aufweist. JP 03 284 709 A offenbart eine ähnliche Messvorrichtung mit einer von einer Schutzhülle umgebenen optischen Faser.

Der Erfindung liegt die Aufgabe zugrunde, die Messung von Kemgrößen in Schmelzen mittels optischer Fasern zu verbessern.

Die Aufgabe wird durch die Merkmale der unabhängigen Ansprüche gelöst. Vorteilhafte Ausgestaltungen sind in den abhängigen Ansprüchen angegeben.

Beim Eintauchen in die Schmelze bzw. beim Annähern an die Schmelze oder die darüber liegende Schlackeschicht (beispielsweise auf Stahlschmelzen) wird die optische Faser natur gemäß aufgeheizt. Die Aufheizung betrifft insbesondere die Spitze bzw. das Eintauchende der optischen Faser. Die optische Faser, deren lichtleitendes Element in der Regel Quarzglas ist, muss beispielsweise in Stahlschmelzen von der Spitze her regelmäßig erneuert werden, da Quarzglas den hohen Temperaturen der Stahlschmelze nicht lange standhält. Das erfindungsgemäße Verfahren bezieht sich dementsprechend auf den jeweils vorderen Teil der optischen Faser, der in die Schmelze oder eine darüberliegende Schlackeschicht eintaucht. Die Aufheizkurve der optischen Faser (die die Erhöhung der Temperatur T als Funktion der Zeit t darstellt) weist erfindungsgemäß mindestens einen Punkt P(t₀,T₀) auf, wobei der Anstieg ΔT₁der optischen Faser Ober die Zeit Δt in einem ersten Zeitintervall t₀-Δt bis auf die Temperatur T₀ kleiner ist als der Anstieg ΔT₂ der Temperatur der optischen Faser über die Zeit Δt in einem sich unmittelbar anschließenden zweiten Zeitintervall t₀+Δt.

Ein solcher Temperaturverlauf bedeutet, dass ab einen bestimmten Zeitpunkt die Aufheizkurve im Prinzip einen Knick (Quasi-Unstetigkeit) aufweist, bei dem die Aufheizgeschwindigkeit deutlich ansteigt gegenüber dem vorherigen Verlauf. Es hat sich gezeigt, dass eine mechanische Bewegung der optischen Faser oder ihren unmittelbaren Umgebung erfolgt, deren Stärke abhängt von der Größe der Änderung der Aufheizgeschwindigkeit und der Kürze des entsprechenden Zeitintervalls. Je größer die Änderung der Aufheizgeschwindigkeit und je kleiner das Zeitintervall Δt ist, desto größer ist die mechanische Bewegung der Faser oder ihrer unmittelbaren Umgebung zum Zeitpunkt dieser quasi sprunghaften Änderung der Aufheizkurve. Diese Bewegung begünstigt das Eintauchen der optischen Faser in die Schmelze sowie die Emeuerung der Spitze der optischen Faser, die durch die plötzlich einsetzende Bewegung (Vibration) praktisch abgestoßen wird, so dass ein frisches, noch nicht durch hohe Temperaturen beschädigtes Ende der Glasfaser nachgeführt werden kann.

Vorzugsweise ist der Anstieg ΔT₂ der Temperatur T nach dem zweiten Zeitintervall t₀+Δt mindestens 5 mal, vorzugsweise mindestens 10 mal, insbesondere mindestens 20 mal so groß wie der Anstieg ΔT₁ der Temperatur in dem ersten Zeitintervall t₀-Δt₁. Insbesondere bevorzugt ist ein 50 mal, besser noch 100 mal größerer Anstieg der Temperatur in dem zweiten Zeitintervall. Die Zeitdauer Δt der beiden Zeitintervalle sollte zweckmäßigerweise höchstens 500 ms, vorzugsweise höchstens 200 ms lang sein.

Zweckmäßig ist es, dass die Temperatur T₀ der optischen Faser, die dem zwischen den beiden Zeitintervallen liegenden Zeitpunkt t₀ zugeordnet ist, maximal 600 °C, vorzugsweise maximal 200 °C, insbesondere vorzugsweise maximal 100 °C beträgt. Dabei ist die Temperatur der eigentlichen optischen Faser im engeren Sinne, also die Temperatur des Quarzglases zu betrachten. Je niedriger diese Temperatur T₀ ist, von der die Änderung der Aufheizgeschwindigkeit ausgeht, desto stärker und wirkungsvoller kann diese Änderung sein.

Die Geschwindigkeit, mit der die optische Faser in die Metallschmelze eingetaucht bzw. an diese herangeführt wird, entspricht der Geschwindigkeit, mit welcher die glasigen Struktur ihrer Spitze zerstört wird, so dass stets neues Glasfasermaterial herangeführt wird, welches zur Aufnahme und Weiterleitung von Strahlung geeignet ist, ohne dass Strahlungsverluste aufgrund einer zerstörten Faserstruktur entstehen.

Erfindungsgemäß ist die Vorrichtung zum Messen einer Kenngröße, insbesondere einer Temperatur, einer Schmelze, insbesondere einer Metallschmelze, mit einer eine Hülle aufweisenden optischen Faser und einem mit der Faser verbundenen Detektor, wobei die Hülle die Faser in mehreren Schichten umgibt, **dadurch gekennzeichnet, dass** eine Schicht als Metallrohr ausgebildet und eine darunter angeordnete Zwischenschicht aus einem Pulver oder einem faserigen oder körnigen Material gebildet ist, wobei das Material der Zwischenschicht die Faser in mehreren separaten Teilen umgibt. Das Merkmal, demzufolge das Material der Zwischenschicht die Faser in mehreren separaten Teilen umgibt, bedeutet im Sinne der Erfindung, dass die Mehrteiligkeit im Betriebszustand besteht, also bei beziehungsweise nach Eintauchen in die zu messende Schmelze. Dabei bestehen Temperaturen von mindestens 1000 °C, vorzugsweise mindestens 1400 °C. In diesem Zustand ist ein eventuell bei der Herstellung verwendetes Bindemittel zwischen den Teilen der Zwischenschicht aufgelöst oder verbrannt, so dass die einzelnen Teile nicht oder zum größten Teil nicht mehr aneinander haften. Die Teile können dabei sowohl kleine Partikel als auch größere zusammenhängende Einheiten, wie Konglomerate oder beispielsweise um die Faser angeordnete Halbschalen bilden. Das Material der Zwischenschicht ist also nicht insgesamt starr sondern zumindest beschränkt in sich beweglich.

Eine solche Zwischenschicht wird während des Eintauchens der optischen Faser in die Metallschmelze oder eine darüberliegende Schlackeschicht aufgeheizt, wobei es sich überraschenderweise gezeigt hat, dass die Kombination aus einem Metallrohr und einer darunter angeordneten Zwischenschicht aus einem Pulver oder einem faserigen oder körnigen Material dazu führt, dass dieses Material der Zwischenschicht sich während des Aufheizens ab einem bestimmten Punkt in einer Aufheizkurve bei Anwesenheit von Gasen plötzlich stark ausdehnt, nämlich, wenn das Metallrohr so stark erhitzt ist, dass es dem Druck nicht mehr standhält, der im Inneren des Metallrohres durch wärmebedingte Ausdehnung der Gase der Zwischenschicht entsteht. In diesem Fall bilden sich schnell steigende Spannungen innerhalb des Metallrohres, bis dieses plötzlich reißt oder anderweitig zerstört wird, so dass die Hülle der optischen Faser sich von der Faser praktisch explosionsartig entfernt. Generell ist die erfindungsgemäße Vorrichtung **dadurch gekennzeichnet, dass** sich bei oder nach der Zerstörung des Metallrohres die Zwischenschicht als Schicht sehr schnell zersetzt, wobei sich ihre Teile von der Faser entfernen. Dadurch wird einerseits die optische Faser an ihrem eingetauchten Ende der Metallschmelze sehr rasch und plötzlich ausgesetzt und andererseits wird das Vordringen der Spitze der optischen Faser in die Metallschmelze deutlich erleichtert.

Die Zwischenschicht ist vorzugsweise aus Siliziumdioxid, Aluminiumdioxid oder einem gegenüber einer Stahlschmelze feuerfesten oder inertem Material gebildet. Das Material der Zwischenschicht ist nicht in sich starr, sondern die einzelnen Materialpartikel sind gegeneinander beweglich, damit zum einem die Hülle mit der optischen Faser möglichst flexibel ist und zum anderen die Sprunghaftigkeit des Abplatzens bzw. Freisetzens dieses Materials gewährleistet ist. Die Hülle kann eine äußere Schicht aus Metall, insbesondere aus Zink, aus keramischem Papier, aus Pappe oder aus Kunststoff aufweisen.

Vorzugsweise weist die Hülle einen Vibrator auf oder es ist ein Vibrator an oder neben der Hülle angeordnet, um die Freisetzung des Materials der Hülle von der optischen Faser bzw. das Entfernen (Abbrechen) der zerstörten Spitze der optischen Faser zu verbessern. Der Vibrator kann auch durch das Material der Zwischenschicht gebildet sein, da es sich gezeigt hat, dass die Partikel des Materials der Zwischenschicht sich bei der Erwärmung gegeneinander bewegen, wobei diese Bewegung teils sprunghaft erfolgt, so dass Vibrationen innerhalb dieses Materials bzw. innerhalb der Zwischenschicht entstehen.

Der Vibrator kann aus einem zwischen 100 °C und 1700 °C gasbildenden Material (z. B. Kunststoff oder anderes in diesem Temperaturbereich verbrennendes oder ausgasendes Material) gebildet sein. Zweckmäßig kann es auch sein, dass zwischen Vibrator und der Hülle ein Zwischenraum angeordnet ist, der kleiner ist als die Schwingungsamplitude des Vibrators. Insbesondere bei außerhalb der Hülle angeordneten Vibrator wirkt dieser mechanisch periodisch auf die Hülle, so dass die Vibration durch diese Schläge optimal übertragen wird. Eine weitere vorteilhafte Möglichkeit besteht darin, dass die Außenseite der Hülle in Längsrichtung hintereinander angeordnete Unebenheiten aufweist, in die ein neben der Hülle, insbesondere an einer Faserführungseinrichtung, angeordnetes Hindernis eingreift, so dass beim Vorschub der optischen Faser eine Vibration erzeugt wird.

Zusätzlich kann die optische Faser von einer Metallhülse als innere Schicht umgeben sein. Die Schichten der Hülle können jeweils direkt aneinander angeordnet sein, wobei die innen gelegene Schicht vorzugsweise direkt an der optischen Faser anliegt. Das Metallrohr der Hülle und auch die Metallhülse sind zweckmäßigerweise aus Stahl gebildet, insbesondere dann, wenn die Vorrichtung zum Messen in Stahlschmelze oder Eisenschmelze eingesetzt wird. Allgemein sollte der Schmelzpunkt des Materials des Metallrohres bzw. der Metallhülse dem Schmelzpunkt der zu messenden Metallschmelze entsprechen.

Die erfindungsgemäße Vorrichtung weist, allgemein gesagt, eine solche Hülle für die Quarzglasfaser auf, die beim Eintauchen in die Metallschmelze diskontinuierlich zerstört wird. Dadurch wird die optische Faser relativ lange bei sehr niedriger Temperatur gehalten und ab einer bestimmten Temperatur wird die Faser sprunghaft aufgeheizt auf die Gleichgewichtstemperatur in der Metallschmelze, so dass die Messung dann sehr zügig erfolgen kann, bevor die optische Faser bzw. ihr in die Metallschmelze eingetauchtes Ende zerstört ist. Durch eine kontinuierliche Nachführung der Faser in die Metallschmelze mit der gleichen Geschwindigkeit, mit der ihr eingetauchtes Ende zerstört wird, steht immer für eine Messung brauchbares Fasermaterial in der Metallschmelze zur Verfügung. Die Spitze der Faser wird kontinuierlich zerstört, so dass die Erosionsfront der Faser praktisch stationär ist. Dazu sollte die Faser bzw. ihr Eintauchende die Badtemperatur in dem Moment erreichen, wenn ihre Degradation beginnt (diese sog. kritische Geschwindigkeit ist in dem Fall also gleich der Erosionsgeschwindigkeit, mit der die Erosionsfront der Faser sich bewegt). Wenn die Erosionsgeschwindigkeit niedriger ist als die kritische Geschwindigkeit, wird die Faser zerstört, bevor sie die Badtemperatur erreicht.

Nachfolgend wird die Erfindung beispielhaft anhand von Zeichnungen erläutert. In der Zeichnung zeigt
- Fig. 1: eine Aufheizkurve,
- Fig. 2: eine schematische Darstellung der Vorrichtung,
- Fig. 3: die Darstellung einer mechanischen Vibrationsmöglichkeit,
- Fig. 4: die schematische Darstellung der erfindungsgemäßen Vorrichtung mit Detektor, in mehreren Ausführungsformen (4a, 4b, 4c),
- Fig. 5: verschiedene Ausführungen der erfindungsgemäßen Faser mit Hülle im Querschnitt (5a bis 5d) und
- Fig. 6: eine Detaildarstellung der erfindungsgemäßen Faser im Querschnitt.

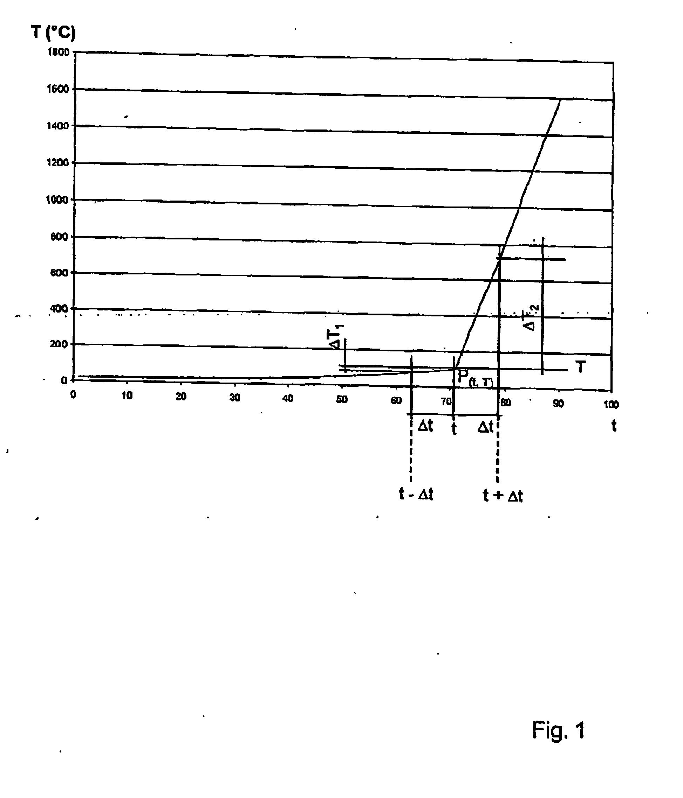

In Fig. 1 ist der Temperatur/Zeitverlauf dargestellt für das Eintauchen einer optischen Faser in eine Stahlschmelze gemäß dem erfindungsgemäßen Verfahren. Die Eintauchgeschwindigkeit der Quarzglasfaser mit Hülle in die Stahlschmelze ist so groß wie ihre Zerstörungsgeschwindigkeit (Erosionsgeschwindigkeit), so dass die Erosionsfront quasi stationär in der Metallschmelze ist. Diese Geschwindigkeit entspricht der kritischen Geschwindigkeit, so dass die optische Faser an der Zerstörungsfront die Badtemperatur erreicht hat.

Die Quarzglasfaser selbst innerhalb ihrer Umhüllung weist über einen langen Zeitraum eine nur sehr geringe Temperaturerhöhung auf. Zu einem bestimmten Zeitpunkt wird sprunghaft ihre Hülle entfernt, so dass sich ihre Temperatur in kurzer Zeit sehr stark bis auf die Gleichgewichtstemperatur in der Stahlschmelze erhöht.

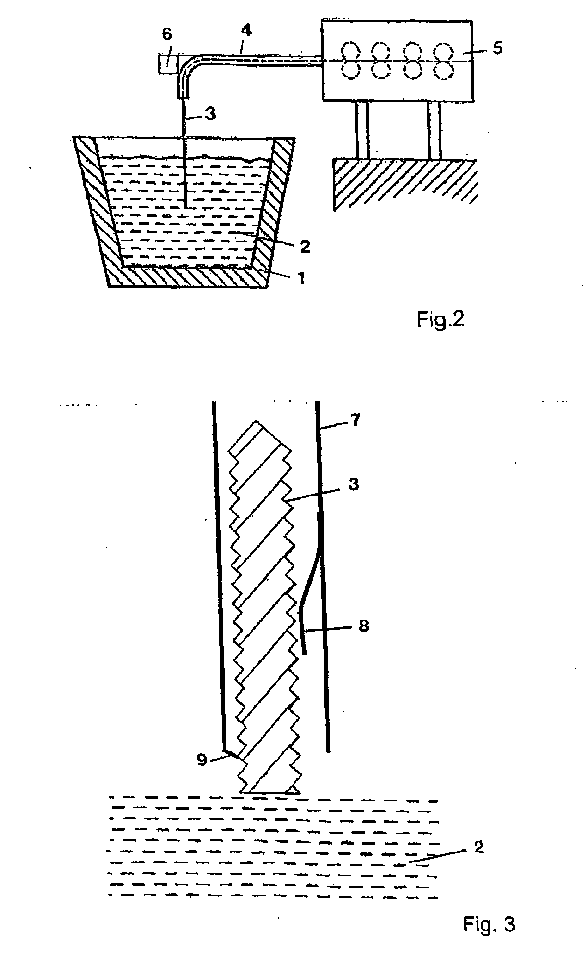

In Fig. 2 ist eine Schmelzwanne 1 mit einer Stahlschmelze 2 dargestellt. In diese taucht eine optische Faseranordnung 3 ein. Die optische Faseranordnung 3 weist oberhalb der Metallschmelze eine äußere Umhüllung 4 auf, die dem leichteren Vortrieb durch eine Vortriebseinrichtung 5 dient. An dem der Stahlschmelze 2 zugewandten Ende der Umhüllung 4 ist ein Vibrator 6 angeordnet, der in kurzen Abständen auf die Umhüllung 4 schlägt, so dass die Hülle der Quarzglasfaser sprunghaft durch die erzeugte Vibration zerstört wird, sobald sie eine vorbestimmte Temperatur erreicht. In diesem Punkt ist die Temperatur der äußeren Stahlhülle bereits sehr hoch, das zwischen der Quarzglasfaser und der äußeren Stahlhülle angeordnete Pulver bzw. das in der Zwischenschicht enthaltene Gas hat sich stark ausgedehnt und sprengt, begünstigt durch die mechanische Einwirkung des Vibrators 6, die ohnehin unterthermomechanischen Spannungen stehende Stahlhülle auf. Infolgedessen wird die Quarzglasfaser der Temperatur der Stahlschmelze unmittelbar ausgesetzt, so dass sie sich extrem schnell auf die Gleichgewichtstemperatur erwärmt. Die Zwischenschicht ist aus Siliziumdioxidpulver oder Aluminiumdioxidpulver gebildet.

Fig. 3 zeigt eine optische Faseranordnung 3 mit einer Hülle, welche an ihrer Außenseite in Längsrichtung hintereinander angeordnete Unebenheiten aufweist. Die optische Faseranordnung 3 wird durch eine Führungshülse 7 geführt, die in ihrem Inneren ein Stützelement 8 aufweist, an welchem die optische Faseranordnung 3 entlanggeführt wird. Auf der dem Stützelement 8 gegenüberliegenden Seite der optischen Faseranordnung 3 ist eine Kante der Führungshülse 7 nach innen abgewinkelt, so dass sie an dieser Stelle ein Hindernis 9 bildet. Dieses Hindernis 9 greift in die Unebenheiten ein, so dass die optische Faseranordnung 3 während ihrer Vorschubbewegung ständig vibriert wird.

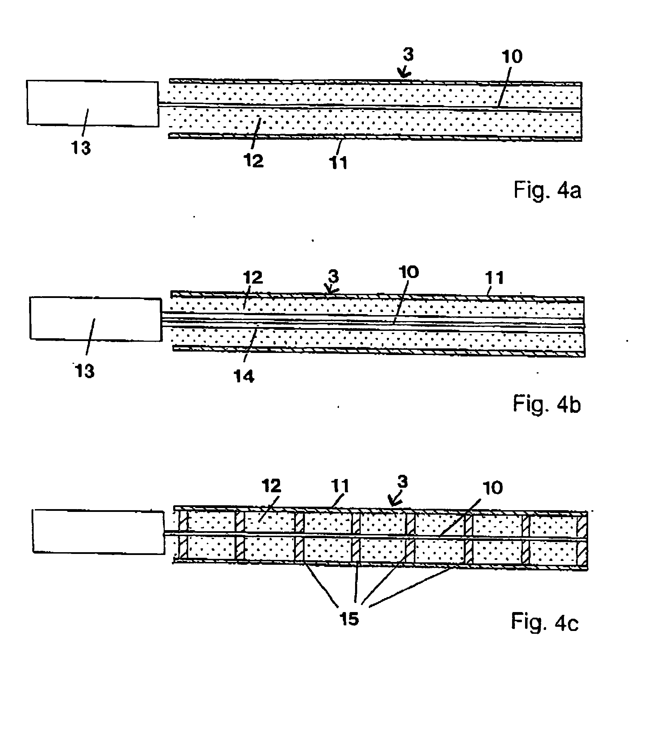

Fig. 4a zeigt eine optische Faseranordnung 3, bei der die Faser 10, eine Quarzglasfaser, von einem Stahlrohr 11 umgeben ist. Innerhalb des Stahlrohres 11 ist eine Zwischenschicht 12 aus Aluminiumdioxidpulver angeordnet. Die Quarzglasfaser 10 ist an ihrem dem Eintauchende der optischen Faser abgewandten Ende mit einem Detektor 13 verbunden. In Fig. 4b ist eine ähnliche Anordnung dargestellt, dabei ist die Quarzglasfaser 10 von einer Metallhülse 14 umgeben. Durch die Metallhülse 14, die am detektorseitigen Ende der optischen Faseranordnung 3 aus dem Stahlrohr 11 herausgeführt ist, kann Kühlgas geleitet werden, so dass die Quarzglasfaser 10 zusätzlich gekühlt wird. Fig. 4c zeigt eine der Fig. 4a ebenfalls ähnliche Anordnung einer optischen Faser 3. Dabei ist der Zwischenraum zwischen dem Stahlrohr 11 und der Quarzglasfaser 10 mit Hilfe von senkrecht zur optischen Faser 10 angeordneten Pappscheiben 15 in mehrere Kammern unterteilt. Die Pappscheiben 15 dienen zum einen der Stabilisierung der Zwischenschicht 12. Sie stabilisieren insbesondere das Pulver der Zwischenschicht 12 während der in Längsrichtung verlaufenden Zerstörung der optischen Faseranordnung 3. Zum anderen wird bei der durch die Erhitzung erfolgenden Verbrennung der Pappscheiben 15 eine zusätzliche Diskontinuität/Disruption erzeugt, die dazu beiträgt, die Quarzglasfaser 10 der Metallschmelze schnell auszusetzen, so dass sie sich nach der Zerstörung der Hülle sehr schnell aufheizt.

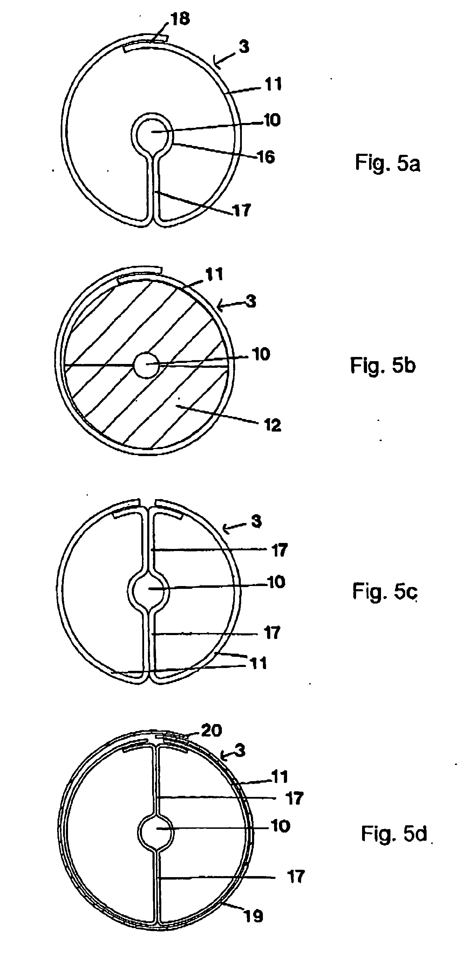

In Fig. 5 sind mehrere Möglichkeiten dargestellt, die Quarzglasfaser 10 im Zentrum der Hülle der optischen Faseranordnung 3 zu stabilisieren. Gemäß Fig. 5a ist das Stahlrohr 11 derart gebogen, dass es einteilig ein konzentrisch angeordnetes inneres Rohr 16 bildet, welches durch einen längs der Hülle verlaufenden Steg 17 mit dem äußeren Stahlrohr 11 verbunden ist. Das äußere Stahlrohr 11 ist an einer Nahtstelle 18 zusammengeschweißt, es weist eine Wanddicke von etwa 0,5 mm auf. In dem inneren Rohr 16 ist die Quarzglasfaser 10 angeordnet. In der Ausführungsform nach Fig. 5b ist die Quarzglasfaser 10 zentrisch in dem Material der Zwischenschicht 12 angeordnet. Fig. 5c zeigt eine weitere Ausführungsform der optischen Faseranordnung 3, ähnlich Fig. 5a. Hier wird allerdings das Stahlrohr 11 aus zwei Hälften zusammengesetzt, die jeweils gemeinsam zwei Stege 17 bilden, durch die die Quarzglasfaser 10 zentrisch arretiert wird. Ähnlich ist die Ausführungsform gemäß Fig. 5d aufgebaut. Sie weist zusätzlich ein zweites äußeres Stahlrohr 19 auf, welches das aus zwei Halbschalen gebildete Stahlrohr 11 zusammenhält. Die Wandung der beiden Stahlrohre 11, 19 kann dabei gegenüber den übrigen Ausführungsformen entsprechend verringert sein und beträgt jeweils etwa 0,25 mm. Es ist eine einzige Schweißung an der Nahtstelle 20 erforderlich.

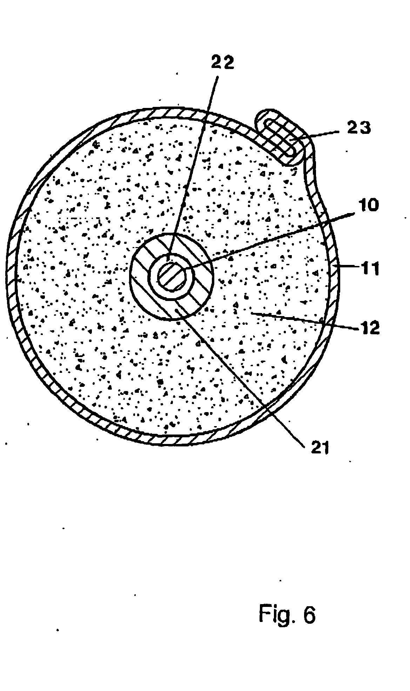

Fig. 6 zeigt einen Faserquerschnitt im Detail. Die Quarzglasfaser 10 ist von einem Stahlmantel 21 in einem geringfügigen Abstand umgeben, so dass unterschiedliche Ausdehnungen der beiden Materialien bei Erhitzung möglich sind und die Quarzglasfaser 10 trotzdem stabilisiert ist. Zwischen dem Stahlmantel 21 und dem Stahlrohr 11 ist eine Zwischenschicht 12 aus Aluminiumoxidpartikeln angeordnet. Das Stahlrohr 11 ist aus einem Blech gerollt und durch eine Falz 23 geschlossen.

## Patentansprüche

1. Verfahren zum Messen einer Kenngröße, insbesondere einer Temperatur, einer Schmelze (2), insbesondere einer Metallschmelze, mittels einer optischen Faser (10), die von einer Hülle umgeben ist, wobei die Hülle die Faser (10) in mehreren Schichten (11;12) umgibt, wobei eine Zwischenschicht (12) die Faser (10) im Betriebszustand in mehreren Stücken umgibt, wobei die optische Faser (10) in die Schmelze (2) eingetaucht wird und wobei die von der optischen Faser (10) in der Schmelze (2) aufgenommene Strahlung einem Detektor zugeführt wird, wobei die optische Faser (10) beim Eintauchen in die Schmelze (2) aufgeheizt wird, und wobei die Aufheizkurve der optischen Faser (10) mindestens einen Punkt P(t₀,T₀) aufweist, bei dem die Hülle entfernt wird, wobei der Anstieg ΔT₁ der Temperatur T der optischen Faser (10) über die Zeit Δt in einem ersten Zeitintervall t₀-Δt bis auf die Temperatur T₀ kleiner ist als der Anstieg ΔT₂ der Temperatur der optischen Faser (10) über die Zeit Δt in einem sich unmittelbar anschließenden zweiten Zeitintervall t₀+Δt.

2. Verfahren nach Anspruch 1, **dadurch gekennzeichnet, dass** der Anstieg ΔT₂ der Temperatur in dem zweiten Zeitintervall t₀+Δt mindestens 5 mal, vorzugsweise mindestens 10 mal, insbesondere mindestens 20 mal so groß ist wie der Anstieg ΔT₁ der Temperatur in dem ersten Zeitintervall t₀-Δt₁.

3. Verfahren nach Anspruch 2, **dadurch gekennzeichnet, dass** der Anstieg ΔT₂ der Temperatur in dem zweiten Zeitintervall t₀+Δt mindestens 50 mal, vorzugsweise mindestens 100 mal mal so groß ist wie der Anstieg ΔT₁ der Temperatur in dem ersten Zeitintervall t₀-Δt₁.

4. Verfahren nach einem der Ansprüche 1 bis 3, **dadurch gekennzeichnet, dass** die Zeit Δt höchstens 500 ms, vorzugsweise höchstens 200 ms lang ist.

5. Verfahren nach einem der Ansprüche 1 bis 4, **dadurch gekennzeichnet, dass** die Temperatur T₀ der optischen Faser (10), die dem zwischen den beiden Zeitintervallen liegenden Zeitpunkt t₀ zugeordnet ist, maximal 600 °C, vorzugsweise maximal 200 °C beträgt.

6. Vorrichtung zur Messen einer Kenngröße, insbesondere einer Temperatur, einer Schmelze (2), insbesondere einer Metallschmelze, mit einer eine Hülle aufweisenden optischen Faser (10) und einem mit der Faser (10) verbundenen Detektor, wobei die Hülle die Faser (10) in mehreren Schichten (11;12) umgibt, **dadurch gekennzeichnet, dass** eine Schicht (11) als Metallrohr ausgebildet ist und eine darunter angeordnete Zwischenschicht (12) aus einem Pulver oder einem faserigen oder körnigen Material gebildet ist, wobei das Material der Zwischenschicht (12) die Faser (10) im Betriebszustand in mehreren Stücken umgibt.

7. Vorrichtung nach Anspruch 6, **dadurch gekennzeichnet, dass** die Zwischenschicht (12) aus Siliziumdioxid, Aluminiumdioxid oder einem gegenüber einer Stahlschmelze feuerfesten oder inertem Material gebildet ist.

8. Vorrichtung nach Anspruch 6 oder 7, **dadurch gekennzeichnet, dass** eine äußere Schicht aus Metall, insbesondere aus Zink, aus keramischem Papier, aus Pappe oder aus Kunststoff gebildet ist.

9. Vorrichtung nach einem der Ansprüche 6 bis 8, **dadurch gekennzeichnet, dass** die Hülle einen Vibrator (6) aufweist oder ein Vibrator (6) an oder neben der Hülle angeordnet ist.

10. Vorrichtung nach Anspruch 9, **dadurch gekennzeichnet, dass** der Vibrator (6) aus einem zwischen 100 °C und 1700 °C gasbildenden Material gebildet ist.

11. Vorrichtung nach Anspruch 9, **dadurch gekennzeichnet, dass** zwischen Vibrator (6) und der Hülle ein Zwischenraum angeordnet ist, der kleiner ist als die Schwingungsamplitude des Vibrators (6).

12. Vorrichtung nach Anspruch 9, **dadurch gekennzeichnet, dass** die Außenseite der Hülle in Längsrichtung hintereinander angeordnete Unebenheiten aufweist, in die ein neben der Hülle, insbesondere an einer Faserführungseinrichtung, angeordnetes Hindernis (9) eingreift.

13. Vorrichtung nach einem der Ansprüche 6 bis 12, **dadurch gekennzeichnet, dass** die optische Faser (10) von einer Metallhülse (14) als innere Schicht umgeben ist.

14. Vorrichtung nach einem der Ansprüche 6 bis 13, **dadurch gekennzeichnet, dass** die Schichten der Hülle jeweils direkt aneinander angeordnet sind, wobei die innen gelegene Schicht vorzugsweise direkt an der optischen Faser (10) anliegt.

## Claims

1. A method for measuring a characteristic variable, more particularly a temperature, of a molten mass (2), more particularly a molten metal, by means of an optical fibre (10) which is surrounded by a cladding, wherein the cladding surrounds the fibre (10) in a plurality of layers (11; 12), wherein an intermediate layer (12) surrounds the fibre (10) in a plurality of pieces in the operating state, wherein the optical fibre (10) is immersed into the molten mass (2) and wherein the radiation absorbed by the optical fibre (10) in the molten mass (2) is supplied to a detector, wherein the optical fibre (10) is heated when it is immersed into the molten mass (2), and wherein the heating curve of the optical fibre (10) comprises at least one point P(t₀,T₀) at which the cladding is removed, wherein the increase ΔT₁ in the temperature T of the optical fibre (10) over the time Δt within a first time interval t₀-Δt up to the temperature T₀ is less than the increase ΔT₂ in the temperature of the optical fibre (10) over the time Δt within an immediately following second time interval to+At.

2. The method according to Claim 1, **characterised in that** the increase ΔT₂ in the temperature within the second time interval t₀+Δt is at least 5 times, preferably at least 10 times, more preferably at least 20 times as large as the increase ΔT₁ in the temperature within the first time interval t₀-Δt.

3. The method according to Claim 2, **characterised in that** the increase ΔT₂ in the temperature within the second time interval t₀+Δt is at least 50 times, preferably at least 100 times as large as the increase ΔT₁ in the temperature within the first time interval t₀-Δt.

4. The method according to any one of Claims 1 to 3, **characterised in that** the time Δt is no more than 500 ms, preferably no more than 200 ms.

5. The method according to any one of Claims 1 to 4, **characterised in that** the temperature T₀ of the optical fibre (10), which is allocated to the point in time to present between the two time intervals, is no more than 600 °C, preferably no more than 200 °C.

6. A device for measuring a characteristic variable, more particularly a temperature, of a molten mass (2), more particularly a molten metal, with an optical fibre (10) that comprises a cladding and a detector that is connected to the fibre (10), wherein the cladding surrounds the fibre (10) in a plurality of layers (11; 12), **characterised in that** one layer (11) is configured as a metal pipe and an intermediate layer (12) arranged thereunder is formed from a powder or a fibrous or granular material, wherein the material of the intermediate layer (12) surrounds the fibre (10) in a plurality of pieces in the operating state.

7. The device according to Claim 6, **characterised in that** the intermediate layer (12) is formed from silicon dioxide, aluminium dioxide or a material that is fire-resistant or inert against the molten steel.

8. The device according to Claim 6 or 7, **characterised in that** an outside layer is formed from metal, more particularly from zinc, from ceramic paper, from cardboard, or from plastic.

9. The device according to any one of Claims 6 to 8, **characterised in that** the cladding comprises a vibrator (6) or a vibrator (6) is arranged at or adjacent to the cladding.

10. The device according to Claim 9, **characterised in that** the vibrator (6) is formed from a material that forms gas between 100 °C and 1700 °C.

11. The device according to Claim 9, **characterised in that** an intermediate space that is smaller than the vibration amplitude of the vibrator (6) is arranged between the vibrator (6) and the cladding.

12. The device according to Claim 9, **characterised in that** the external surface of the cladding comprises unevennesses that are arranged one after the other in longitudinal direction, with an obstacle (9) that is arranged adjacent to the cladding, more particularly at a fibre guiding device, engaging in said unevennesses.

13. The device according to any one of Claims 6 to 12, **characterised in that** the optical fibre (10) is surrounded by a metal sleeve (14) as an inner layer.

14. The device according to any one of Claims 6 to 13, **characterised in that** the layers of the cladding are each arranged directly adjacent to each other, wherein the inwardly positioned layer, preferably, directly rests against the optical fibre (10).

## Revendications

1. Procédé de mesure d'un paramètre, notamment d'une température, d'une masse fondue (2), notamment d'une masse fondue métallique, au moyen d'une fibre optique (10) qui est entourée d'une enveloppe, dans lequel l'enveloppe entoure la fibre (10) en plusieurs couches (11 ; 12), dans lequel une couche intermédiaire (12) entoure la fibre (10) à l'état de fonctionnement en plusieurs morceaux, dans lequel la fibre optique (10) est immergée dans la masse fondue (2) et dans lequel le rayonnement absorbé par la fibre optique (10) dans la masse fondue (2) est amené à un détecteur, dans lequel la fibre optique (10) est chauffée lors de l'immersion dans la masse fondue (2), et dans lequel la courbe de chauffage de la fibre optique (10) présente au moins un point P(t₀, T₀) auquel l'enveloppe est éliminée, dans lequel la montée ΔT₁ de la température T de la fibre optique (10) sur la durée Δt dans un premier intervalle de temps t₀-Δt jusqu'à la température T₀ est inférieure à la montée ΔT₂ de la température de la fibre optique (10) sur la durée Δt dans un second intervalle de temps t₀+Δt directement subséquent.

2. Procédé selon la revendication 1, **caractérisé en ce que** la montée ΔT₂ de la température dans le second intervalle de temps t₀+Δt est au moins 5 fois, de préférence au moins 10 fois, notamment au moins 20 fois plus grande que la montée ΔT₁ de la température dans le premier intervalle de temps t₀-Δt₁.

3. Procédé selon la revendication 2, **caractérisé en ce que** la montée ΔT₂ de la température dans le second intervalle de temps t₀+Δt est au moins 50 fois, de préférence au moins 100 fois plus grande que la montée ΔT₁ de la température dans le premier intervalle de temps t₀-Δt₁.

4. Procédé selon l'une quelconque des revendications 1 à 3, **caractérisé en ce que** la durée Δt est de 500 ms maximum, de préférence de 200 ms maximum.

5. Procédé selon l'une quelconque des revendications 1 à 4, **caractérisé en ce que** la température T₀ de la fibre optique (10) qui est associée à l'instant t₀ situé entre les deux intervalles de temps, est de 600°C maximum, de préférence de 200°C maximum.

6. Dispositif de mesure d'un paramètre, notamment d'une température, d'une masse fondue (2), notamment d'une masse fondue métallique, avec une fibre optique (10) présentant une enveloppe et un détecteur relié à la fibre (10), dans lequel l'enveloppe entoure la fibre (10) en plusieurs couches (11 ; 12), **caractérisé en ce qu'**une couche (11) est réalisée en tant que tube métallique et une couche intermédiaire (12) disposée en dessous de celle-ci est formée d'une poudre ou d'un matériau fibreux ou granuleux, dans lequel le matériau de la couche intermédiaire (12) entoure la fibre (10) à l'état de fonctionnement en plusieurs morceaux.

7. Dispositif selon la revendication 6, **caractérisé en ce que** la couche intermédiaire (12) est formée de dioxyde de silicium, dioxyde d'aluminium ou d'un matériau ignifuge ou inerte par rapport à une masse fondue d'acier.

8. Dispositif selon la revendication 6 ou 7, **caractérisé en ce qu'**une couche extérieure est formée de métal, notamment de zinc, de papier céramique, de carton ou de plastique.

9. Dispositif selon l'une quelconque des revendications 6 à 8, **caractérisé en ce que** l'enveloppe présente un vibrateur (6) ou un vibrateur (6) est disposé sur ou près de l'enveloppe.

10. Dispositif selon la revendication 9, **caractérisé en ce que** le vibrateur (6) est formé d'un matériau formant du gaz entre 100°C et 1700°C.

11. Dispositif selon la revendication 9, **caractérisé en ce qu'**un espace intermédiaire est disposé entre le vibrateur (6) et l'enveloppe, lequel est inférieur à l'amplitude d'oscillation du vibrateur (6).

12. Dispositif selon la revendication 9, **caractérisé en ce que** le côté extérieur de l'enveloppe présente des irrégularités disposées l'une derrière l'autre dans la direction longitudinale, dans lesquelles un obstacle (9) disposé près de l'enveloppe, notamment sur un dispositif de guidage de fibres, s'engrène.

13. Dispositif selon l'une quelconque des revendications 6 à 12, **caractérisé en ce que** la fibre optique (10) est entourée d'un manchon métallique (14) en tant que couche intérieure.

14. Dispositif selon l'une quelconque des revendications 6 à 13, **caractérisé en ce que** les couches de l'enveloppe sont disposées chacune directement l'une sur l'autre, dans lequel la couche située à l'intérieur repose de préférence directement sur la fibre optique (10).
